# EUROPEAN PATENT APPLICATION

(11) **EP 3 205 484 A1**
(43) Date of publication of application: **16.08.2017**
(21) Application number: 17155333.2
(22) Date of filing: 09.02.2017
(51) Int. Cl.: B29C 67/00, B33Y 30/00

(54) **THREE-DIMENSIONAL PRINTING MACHINE**

(30) Priority: 11.02.2016 IT UB20160652
(71) Applicant: Sisma S.p.A., 36013 Piovene Rocchette (Vicenza) (IT)
(72) Inventor: BAZZUCCO, Fabiano, 36013 PIOVENE ROCCHETTE (Vicenza) (IT); GAMBA, Guido, 36013 PIOVENE ROCCHETTE (Vicenza) (IT)
(74) Representative: Lissandrini, Marco

(57) **Abstract**

The three-dimensional printing machine (100) comprises a modelling head (101) having a work surface (101 a) suitable to allow the formation and adhesion of an object. The machine (100) further comprises an irradiation source and a tank (2) suitable for containing a solidifiable liquid and for allowing stimulation by said irradiation source, said tank (2) being connected to a support structure (3). The machine (100) is provided with a vibrating means (8) operatively active on the tank (2) and comprises a suspension means (4) for connecting the tank (2) in a suspended way to the support structure (3) and in a movable way with respect to the latter.

## Description

The present invention relates to a three-dimensional printing machine.

In more detail, the present invention falls within the technical sector of so-called "3D printing" or "stereolithography" which, as is known, is a technique that allows three-dimensional objects to be produced, by solidifying and superimposing a plurality of layers obtained starting from a liquid resin, susceptible to solidification under the action of an external stimulation.

The three-dimensional printing technique can be specifically and effectively used in the realisation of prototypes for various types of industries, from the plastic to the goldsmith sector.

In accordance with the state of the art, a three-dimensional printing machine comprises a tank for containing the liquid resin and a modelling head equipped with a work surface, generally flat, adapted to support the solidified layers of the three-dimensional object to be produced. Furthermore, there is a resin stimulating device comprising an irradiation source, typically a laser emitter or a light projector, able to selectively irradiate the layer of liquid resin adjacent to the bottom of the tank, so as to solidify it. In more detail, each layer of the object is obtained by selectively stimulating the resin so as to solidify it in the points that compose a corresponding section of the object to be produced.

In accordance with a very widespread known technique, the irradiation source is positioned below the tank, whose bottom is appropriately transparent to the radiation emitted by the source itself. In this case, the three-dimensional printing process first of all requires the modelling head to be positioned at a distance, from the bottom of the tank, equal to the thickness of the layer to be solidified. Subsequently, the irradiation source selectively irradiates the layer of liquid resin adjacent to the bottom of the tank, so as to solidify it. In more detail, the modelling head is configured so that the solidified layer adheres to it while, on the contrary, the bottom of the tank has a coating that reduces such adhesion. For the formation of each subsequent layer, the modelling head is moved away from the bottom of the tank, so as to make the solidified layer emerge and thus allow the necessary thickness of the liquid resin to be restored for the processing of a subsequent layer. Following this, the modelling head brings the object back into a position such that the last solidified layer is at a distance, from the bottom of the tank, equal to the thickness of the new layer to be solidified, so that the latter solidifies adherent to the previous layer. In accordance with this first known technique, the work surface on which the object is formed faces downwards and the modelling head is, therefore, gradually raised and moved away from the tank.

In some circumstances, it may arise that the object being processed adheres to the bottom of the tank due to the surface tension of the resin. In fact, although the bottom of the tank is normally made of non-stick material, for example silicone material, the surface tension of the resin exerts an adhesion force which tends to make the object stick to the bottom of the tank. In other words, the surface tension of the resin causes a sort of "suction effect" which tends to make the object adhere to the bottom of the tank. This circumstance is particularly inconvenient, since it can cause the detachment of the object from the processing head with the consequent waste of the object and therefore loss of productivity of the machine.

To solve this problem, controlling the rising movement of the modelling head is known. In particular, the modelling head is moved away from the bottom of the tank gradually, with discrete and progressively larger movements.

Disadvantageously, this solution has the drawback of being complex to implement, since it requires careful electronic control of the stroke of the modelling head and specific calibration, according to the type of object being formed inside the machine.

In this context, the technical task underlying the present invention is to propose a three-dimensional printing machine, which obviates the drawbacks of the known art as mentioned above. In particular, it is an object of the present invention to provide a machine that can guarantee a safe and gentle detachment of the object from the bottom of the tank, in case adhesion takes place due to the effect of the surface tension of the resin. More particularly, is also a main object of the invention to provide a machine that does not damage the object during the detachment step.

Another object of the present invention is to provide a machine that can intervene independently under all conditions, i.e. without requiring calibration operations or manual interventions.

A further object of the present invention is to provide a machine that is reliable and simple to construct.

The stated technical task and specified objects are substantially achieved by a three-dimensional printing machine comprising the technical features disclosed in one or more of the appended claims. The dependent claims correspond to further embodiments of a machine, according to the present invention.

Further characteristics and advantages of the present invention will become more apparent from the following indicative, and hence non-limiting, description of a preferred, but not exclusive, embodiment of a three-dimensional printing machine, as illustrated in the appended drawings, in which:
- figure 1 illustrates an overall perspective view of a three-dimensional printing machine according to the invention;
- figure 2 illustrates a front view of the machine shown in figure 1;
- figure 3 illustrates a perspective view from above of a first structural detail of the machine shown in figures 1 and 2;
- figure 4 illustrates an overturned perspective view from below of the structural detail shown in figure 3;
- figure 5 illustrates a perspective view from above of a second structural detail of the machine shown in figures 1 and 2;
- figure 6 illustrates an overturned perspective view from below of the structural detail shown in figure 5.

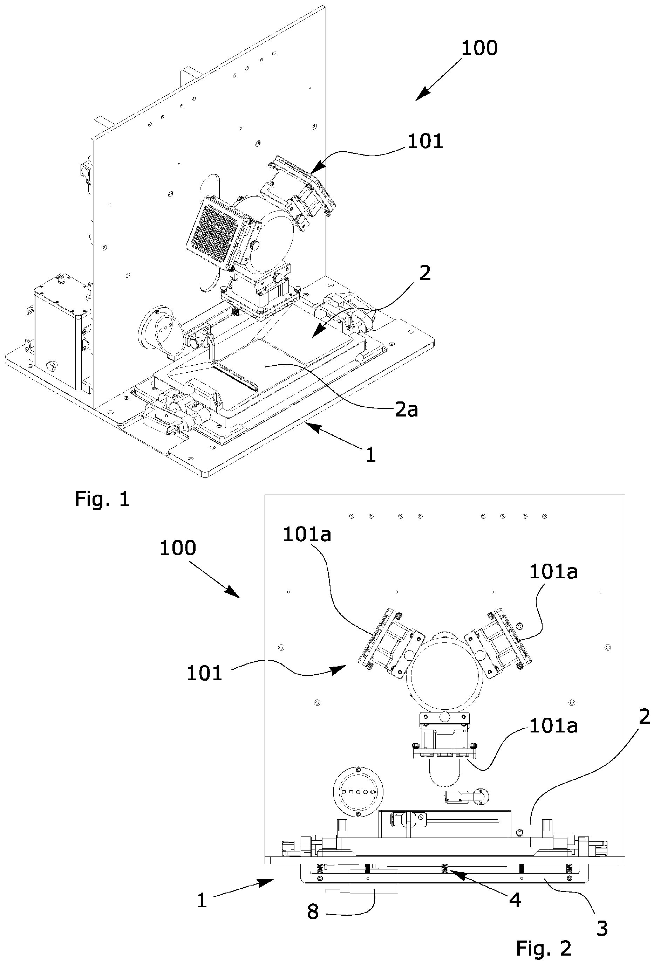

Purely by way of non-limiting example, figures 1 and 2 illustrate a three-dimensional printing machine 100, comprising a tank 2 suitable for containing a solidifiable liquid and to allow stimulation by an external agent. Generally, the solidifiable liquid is a resin able to solidify under the action of radiation emitted by an irradiation source, for example a laser emitter or a light projector.

The machine 100 comprises an irradiation source (not illustrated), preferably positioned below the tank 2, a bottom 2a of which has a portion that is appropriately transparent to the radiation emitted by the source itself.

The machine 100 is provided with at least one modelling head 101 having a work surface 101 a suitable to allow the formation and adhesion of an object. In the example illustrated, the machine 100 preferably comprises three modelling heads.

In accordance with an illustrated aspect of the invention, for example, in figures 2, 4 and 6, the machine 100 comprises vibrating means 8 operatively active on the tank 2, to promote the detachment of the object from the bottom of the tank, when the object adheres to it due to the effect of the surface tension of the solidifiable liquid. Preferably, the vibrating means are fixed directly onto the tank.

In accordance with a further variant of the embodiment not illustrated, the machine comprises a base, to which the tank is securely connected. In particular, the vibrating means are operatively active on the base of the machine, to place it in vibration together with the tank, hence allowing the detachment of the object. Such solution is advantageously simple to construct and allows both the modelling head and the tank to be oscillated, increasing the effectiveness of the vibrations in promoting the detachment of the object from the bottom of the tank.

Preferably, the vibrating means 8 operate at a frequency comprised between about 500 Hz and about 12,000 Hz, since it has been found that such interval of frequencies guarantees the detachment of the object in practically all operating conditions and with any type of object.

According to a further aspect of the invention, the vibrating means 8 are of the electromagnetic or piezoelectric or pneumatic type.

According to an aspect of the invention illustrated in figure 2, the machine 100 comprises a support structure 3 for supporting the tank 2.

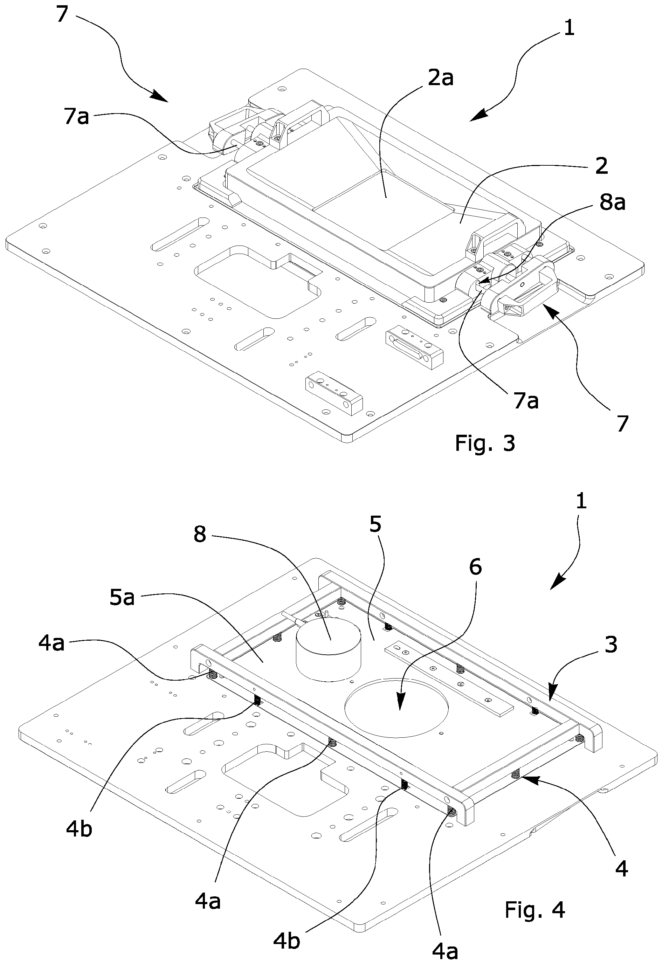

In accordance with an aspect of the invention (figures 2 and 4), the machine 100 comprises suspension means 4 for connecting the tank 2 in a suspended fashion to the support structure 3 and in a movable fashion with respect to the latter. In particular, a suspended and movable connection allows the tank to be isolated from the modelling head and from any other components. Therefore, advantageously, the suspended connection protects the modelling head and the components of the machine from possible damage or malfunctioning caused by the vibrations.

In accordance with another aspect of the invention, the suspension means 4 comprise at least one elastic element, preferably a helical spring. According to a variant of the embodiment, said elastic element may comprise a plug made of elastomeric material.

According to a further aspect of the invention, the suspension means 4 comprise a plurality of elastic elements, for example a plurality of helical springs. Preferably, at least one elastic element 4a is preloaded by compression and at least one elastic element 4b is preloaded by traction.

In accordance with another aspect of the invention better shown in figures 4, 5 and 6, the elastic elements 4a preloaded by compression are alternated by elastic elements 4b preloaded by traction, to form a joining line to the support structure 3. In particular, the elastic elements have an elastic constant comprised between about 10 N/m and about 40 N/m.

Preferably, both the elastic elements preloaded by compression and the elastic elements preloaded by traction comprise helical springs.

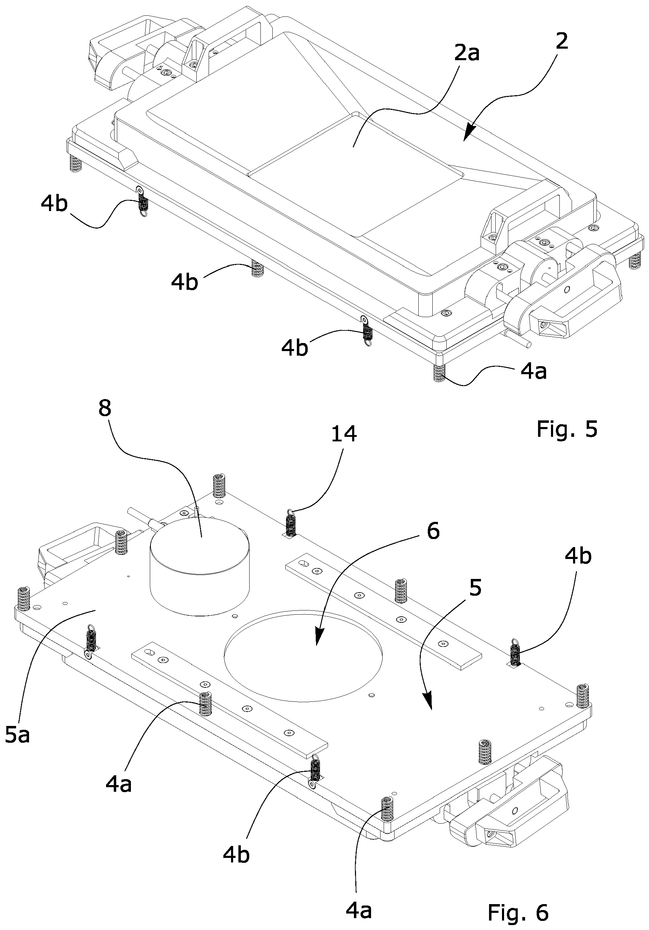

According to an aspect of the invention shown in figure 6, the machine 100 comprises a tank-holder frame 5 to which the tank 2 is securely fixed. In this case, preferably, the suspension means 4 connect the tank-holder frame 5 in a suspended way to the support structure 3 and in a movable way with respect to the latter.

In the presence of the tank-holder frame 5 and according to a further aspect of the invention, the vibrating means 8 are operatively active on said frame. In particular, the vibrating means 8 are fixed onto a bottom 5a of the tank-holder frame 5.

In accordance with a further aspect of the invention shown, for example, in figure 6, the tank-holder frame 5 is provided with an opening 6 positioned at said transparent portion of the bottom 2a of the tank 2.

In accordance with a further aspect of the invention shown, for example, in figure 3, the machine 100 comprises connection means 7 for removably connecting the tank 2 to the tank-holder frame 5. In particular, said connection means 7 comprise at least one pin, preferably a plurality of pins 7a, adapted to be engaged in suitable seats 8a, for connecting the tank securely to the frame 5.

According to a further aspect of the invention, the machine comprises a processing unit (not illustrated) capable of receiving a signal representing an operational status of the irradiation source. In particular, the processing unit is operatively connected to the vibrating means to activate it for a predetermined time interval starting from when the operation of the irradiation source is switched off, at the end of a processing step. Advantageously, the processing unit controls the activation of the vibrating means, so that it does not start to operate during the irradiation step, in order not to make the tank vibrate during the formation of a layer of the object. Advantageously, therefore, the processing unit prevents irreparable damage to the object, during its formation on the work surface of the modelling head.

The operation of the invention is as follows.

The modelling head 101 is positioned at a distance, from the bottom 2a of the tank 2, equal to the thickness of the layer to be solidified. Subsequently, the irradiation source selectively irradiates the layer of liquid resin adjacent to the bottom 2a of the tank 2, so that said layer is solidified and adheres to the work surface 101 a of the head. The modelling head 101 is then moved away from the bottom 2a of the tank 2, so as to make the solidified layer emerge and thus allow the necessary thickness of the liquid resin to be restored for the processing of a subsequent layer.

After the operation of the irradiation source has been switched off, the processing unit activates the vibrating means 8 for a predetermined time interval. The vibrating means induce a vibration of the tank 2 such as to shake the tank and the liquid contained therein; in this way, the tank exerts a mechanical detachment action and in the liquid (resin) air is let in between the bottom 2a of the tank and the object being processed. Advantageously, said combination between the mechanical action and the inlet of air breaks the adhesion of the object to the bottom of the tank, allowing a safe and gentle detachment of the object itself.

Advantageously, the vibrating means are particularly effective in the presence of objects that undergo strong adhesion to the bottom of the tank, for example, objects with large base surface areas.

Advantageously, in accordance with the aspect of the invention that provides for the presence of elastic elements preloaded by compression alternated by elastic elements preloaded by traction, the rising movement of the head - due to the adhesion of the object to the bottom - induces one or more inclinations of the tank 2 with respect to the horizontal direction, increasing the inlet of air between the bottom 2a of the tank 2 and the object being processed, further promoting detachment.

After the detachment of the object from the bottom of the tank, and once the aforementioned predetermined time interval has passed, the processing unit deactivates the vibrating means. The modelling head 101 moves away from the tank and then inverts its stroke to bring the object back into a position such that the last solidified layer is at a distance, from the bottom 2a of the tank 2, equal to the thickness of the new layer to be solidified, so that the latter solidifies adherent to the previous layer and the process is repeated a desired number of times.

It has been noted in practice how the invention achieves the predetermined objects and the following further advantages.

Firstly, the presence of the vibrating means 8 do not require any calibration and allows the machine 100 to operate with any type of object to be formed.

Finally, advantageously, the machine according to the invention operates independently and automatically, without the need for manual interventions.

## Claims

1. A three-dimensional printing machine (100), comprising:
a modelling head (101) having a work surface (101 a) suitable for allowing the formation and the adhesion of an object;
an irradiation source;
a tank (2) suitable for containing a solidifiable liquid and to allow its stimulation by said irradiation source;
a support structure (3) for supporting said tank;
vibrating means (8) which are operatively active on the tank (2),
**characterised in that** it comprises suspension means (4) for connecting the tank (2) in a suspended fashion to the support structure (3) and in a movable fashion with respect to the latter.

2. The machine (100) according to claim 1, wherein said vibrating means (8) operate at a frequency of between approximately 500 Hz and approximately 12,000 Hz.

3. The machine (100) according to any one of the preceding claims, wherein said vibrating means (8) are of the electromagnetic or piezoelectric or pneumatic type.

4. The machine (100) according to claim 1, wherein said suspension means (4) comprise at least one elastic element.

5. The machine (100) according to claim 4, comprising a plurality of elastic elements.

6. The machine (100) according to claim 5, wherein at least one elastic element (4a) is preloaded by compression and at least one elastic element (4b) is preloaded by traction.

7. The machine (100) according to claim 6, wherein elastic elements (4a) preloaded by compression are alternated by elastic elements (4b) preloaded by traction, to form a joining line to the support structure (3).

8. The machine (100) according to claim 1, comprising a tank-holder frame (5) to which the tank (2) is securely fixed, said suspension means connecting the tank-holder frame (5) to the support structure (3) in a suspended fashion and in a movable fashion with respect to the latter, said vibrating means (8) being operatively active on the tank-holder frame (5).

9. The machine (100) according to claim 8, wherein the tank (2) has at least one bottom portion (2a) which is transparent to radiation emitted by the irradiation source, said tank-holder frame (5) being provided with an opening (6) positioned at the transparent portion.

10. The machine (100) according to any one of claims 4 to 9, wherein said elastic element comprises a helical spring.

11. The machine (100) according to any one of claims 4 to 9, wherein the elastic element comprises a plug made of elastomeric material.

12. The machine (100) according to any one of claims 8 or 9, comprising means (7) for removably connecting the tank (2) to the tank-holder frame (5).

13. The machine (100) according to any one of the preceding claims, comprising a processing unit capable of receiving a signal representing an operational status of said irradiation source, said processing unit being operatively connected to said vibrating means (8) to activate it for a predetermined time interval starting from when the operation of the irradiation source is switched off, at the end of a processing step.
